(19) Europäisches Patentamt / European Patent Office / Office européen des brevets

(11) **EP 4 703 025 A1**

(12) **EUROPEAN PATENT APPLICATION**
published in accordance with Art. 153(4) EPC

(43) Date of publication:
04.03.2026 Bulletin 2026/10

(21) Application number: 24796796.1

(22) Date of filing: 10.04.2024

(51) International Patent Classification (IPC):
**B01D 53/22** (2006.01)   **B01D 69/12** (2006.01)
**B01D 71/02** (2006.01)

(52) Cooperative Patent Classification (CPC):
**B01D 53/22; B01D 69/12; B01D 71/02**

(86) International application number:
**PCT/JP2024/014561**

(87) International publication number:
**WO 2024/225040 (31.10.2024 Gazette 2024/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 25.04.2023 JP 2023071639

(71) Applicant: NGK Insulators, Ltd.
Nagoya-shi, Aichi 467-8530 (JP)

(72) Inventors:
• SHIMIZU Katsuya
Nagoya-shi, Aichi 467-8530 (JP)
• IIDA Kazuki
Nagoya-shi, Aichi 467-8530 (JP)
• MAEHARA Sota
Nagoya-shi, Aichi 467-8530 (JP)
• KAN Hirofumi
Nagoya-shi, Aichi 467-8530 (JP)

(74) Representative: Mewburn Ellis LLP
Aurora Building
Counterslip
Bristol BS1 6BX (GB)

(54) **MEMBRANE SEPARATION SYSTEM**

(57) Provided is a membrane separation system that enables the separation of a condensable component in a liquid state with less energy. The membrane separation system according to an embodiment of the present disclosure includes a membrane separator including a separation membrane. The membrane separator has a first flow path and a second flow path. A mixed gas is to be supplied to the first flow path. The mixed gas contains: a permeate gas that is allowed to permeate through the separation membrane; and a condensable component in a gaseous state. The permeate gas that has permeated through the separation membrane is allowed to flow through the second flow path. The membrane separation system is configured so that the condensable component in a liquid state is present in a downstream end portion of the first flow path in a direction of passage of the mixed gas.

FIG. 1

100

EP 4 703 025 A1

## Description

Technical Field

The present disclosure relates to a membrane separation system.

Background Art

During a refrigeration cycle used in air-conditioning apparatus and the like, a non-condensable component such as air may be entrapped into a condensable component such as a refrigerant vapor, and a mixed gas may be generated therefrom. In this case, it is desired that the non-condensable component be separated from the mixed gas to recover the condensable component. There has been proposed, for example, a non-condensable gas purge system that cools a mixed gas to liquify a condensable component to thereby separate the condensable component from a non-condensable component (see, for example, Patent Literature 1). However, the non-condensable gas purge system described in Patent Literature 1 requires the cooling of the mixed gas to below a condensation point, and thus has a problem in that large energy is required for the separation of the condensable component.

Citation List

Patent Literature

[PTL 1] JP 2019-515230 A1

Summary of Invention

Technical Problem

A primary object of the present disclosure is to provide a membrane separation system that enables the separation of a condensable component in a liquid state with less energy.

Solution to Problem

[1] According to an embodiment of the present disclosure, there is provided a membrane separation system, which includes a membrane separator including a separation membrane. The membrane separator has a first flow path and a second flow path. A mixed gas containing: a permeate gas that is allowed to permeate through the separation membrane; and a condensable component in a gaseous state is to be supplied to the first flow path. The permeate gas that has permeated through the separation membrane is allowed to flow through the second flow path. The membrane separation system is configured so that the condensable component in a liquid state is present in a downstream end portion of the first flow path in a direction of passage of the mixed gas.

[2] In the membrane separation system according to the above-mentioned item [1], the first flow path may be inclined downward in a vertical direction as extending toward a downstream side in the direction of passage of the mixed gas.

[3] In the membrane separation system according to the above-mentioned item [1] or [2], when an upstream end portion of the first flow path in the direction of passage is defined as 0%, and the downstream end portion of the first flow path is defined as 100%, the membrane separation system may be configured so that the condensable component in a liquid state is present in at least part of a range of 20% or more and 100% or less of the first flow path.

[4] In the membrane separation system according to any one of the above-mentioned items [1] to [3], the membrane separation system may be configured so that the condensable component in a liquid state is present on at least part of a surface defining the first flow path.

[5] In the membrane separation system according to any one of the above-mentioned items [1] to [4], when a start point of a steady operation for supplying the mixed gas to the first flow path to separate the condensable component in a liquid state is defined as 0%, and an end point of the steady operation is defined as 100%, an average value of a gas permeation amount at which a gas permeates through the separation membrane during a period of from 90% to 100% of the steady operation may be 0.5 or more with respect to an average value of a gas permeation amount at which a gas permeates through the separation membrane during a period of from 45% to 55% of the steady operation.

[6] In the membrane separation system according to any one of the above-mentioned items [1] to [5], a protective layer may be formed on a surface of the separation membrane. The protective layer faces the first flow path.

[7] In the membrane separation system according to any one of the above-mentioned items [1] to [6], the separation membrane may be an inorganic membrane.

[8] The membrane separation system according to any one of the above-mentioned items [1] to [7] may further include a recovery unit. The recovery unit is capable of recovering the condensable component in a liquid state.

[9] In the membrane separation system according to any one of the above-mentioned items [1] to [8], the membrane separator may further include a separation membrane container that houses the separation membrane. The separation membrane container may have a gas inlet, a first gas outlet, and a second gas outlet. The gas inlet is in communication with an upstream end portion of the first flow path in the direction of passage. The first gas outlet is in communication with the downstream end portion of the first flow path in the direction of passage. The second gas outlet is in communication with the second flow path.

Advantageous Effects of Invention

According to the embodiment of the present disclosure, the membrane separation system that enables the separation of the condensable component in a liquid state with less energy is provided.

Brief Description of Drawings

FIG. **1** is a schematic configuration view of a membrane separation system according to one embodiment of the present disclosure.

FIG. **2** is a schematic configuration view of a membrane separation system according to another embodiment of the present disclosure.

FIG. **3** is an explanatory schematic configuration view for illustrating the arrangement of a separation membrane of FIG. **1.**

FIG. **4** is a schematic configuration view of a membrane separation system according to still another embodiment of the present disclosure.

FIG. **5** is a schematic configuration view of a separation membrane complex including the separation membrane of FIG. **1.**

FIG. **6** is a schematic cross-sectional view of the separation membrane complex of FIG. **5.**

FIG. **7** is a schematic perspective view of one modification example of the separation membrane complex.

FIG. **8** is a schematic cross-sectional view of the separation membrane complex of FIG. **7.**

Description of Embodiments

Embodiments of the present disclosure are described below with reference to the drawings. However, the present disclosure is not limited to these embodiments. For clearer illustration, some widths, thicknesses, shapes, and the like of respective portions may be schematically illustrated in the drawings in comparison to the embodiments. However, the widths, the thicknesses, the shapes, and the like are merely an example, and do not limit understanding of the present disclosure.

A. Outline of Membrane Separation System

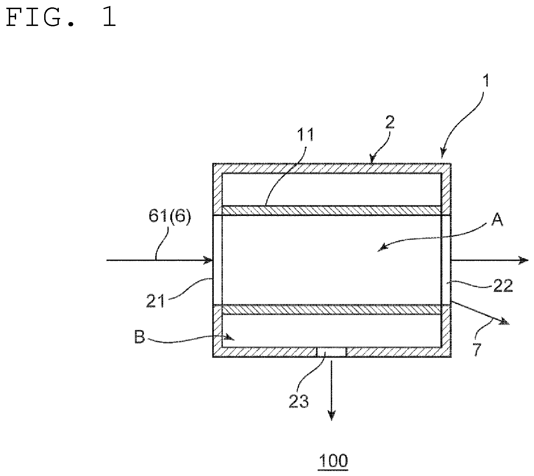

FIG. **1** is a schematic configuration view of a membrane separation system according to one embodiment of the present disclosure.
A membrane separation system **100** in the illustrated example includes a membrane separator **1** including a separation membrane **11**. The membrane separator **1** has a first flow path **A** and a second flow path **B.** A mixed gas containing: a permeate gas that is allowed to permeate through the separation membrane **11;** and a condensable component in a gaseous state is supplied to the first flow path **A.** The permeate gas that has permeated through the separation membrane **11** flows through the second flow path **B.** The membrane separation system **100** is configured so that the condensable component in a liquid state is present in a downstream end portion of the first flow path **A** in a direction of passage of the mixed gas.
With the configuration as described above, when the mixed gas containing the permeate gas and the condensable component in a gaseous state is supplied to the first flow path, the separation membrane allows at least part of the permeate gas contained in the mixed gas, to permeate therethrough and to flow into the second flow path. Thus, the partial pressure of the condensable component in the mixed gas passing through the first flow path increases as the mixed gas flows downstream in the direction of passage. As a result, the condensable component can be smoothly liquified and can be present in the downstream end portion of the first flow path in the direction of passage. Thus, the membrane separation system as described above can separate and recover the condensable component in a liquid state with less energy despite its simple configuration.
Examples of the permeate gas contained in the mixed gas include air.
The condensable component contained in the mixed gas preferably contains a refrigerant. Examples of the refrigerant include glycols and fluorine-containing compounds. The condensable components may be used alone or in combination. Of the condensable components, glycols are preferred.
The separation membrane **11** typically has a cylindrical shape extending in the direction of passage of the mixed gas. The separation membrane **11** having a cylindrical shape includes the first flow path **A** defined inside the separation membrane **11**. The length of the first flow path **A** may be suitably and appropriately adjusted.

Although not shown, the outer side of the separation membrane **11** having a cylindrical shape may be in contact with the first flow path **A**. In this case, the inner side of the separation membrane **11** can define the second flow path **B**.

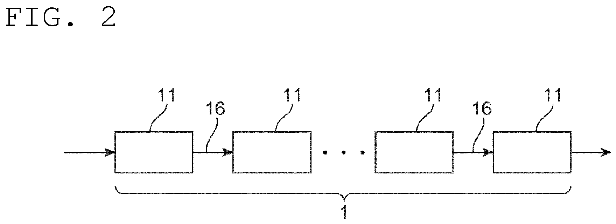

In the illustrated example, the membrane separator **1** includes a single separation membrane **11**. The membrane separator **1** may include a plurality of separation membranes **11** as illustrated in FIG. **2**. In the illustrated example, the plurality of separation membranes **11** are connected in series so that the internal spaces of the separation membranes **11** are in communication with each other. In this case, separation membranes **11** adjacent to each other among the plurality of separation membranes **11** may be connected to each other through intermediation of a connection line **16**.

In the membrane separator **1** including the plurality of separation membranes **11**, the internal spaces of the plurality of separation membranes **11** and, when required, the internal spaces of the connection lines **16** define the first flow path **A**.

For convenience, the first flow path **A** is described below for the membrane separator **1** including a single separation membrane **11** illustrated in FIG. **1**, FIG. **3**, and FIG. **4**. However, the first flow path **A** in the membrane separator **1** including the plurality of separation membranes **11** can also be described in the same manner.

As illustrated in FIG. **1**, in one embodiment, the membrane separation system **100** is configured so that the condensable component in a liquid state is present on at least part of the surface defining the first flow path **A**. The configuration as described above allows the condensable component in a liquid state to be smoothly discharged from the first flow path along the surface. Thus, excessive accumulation of the condensable component in a liquid state in the first flow path can be prevented.

In one embodiment, when an upstream end portion of the first flow path **A** in the direction of passage is defined as 0%, and the downstream end portion of the first flow path **A** is defined as 100%, the membrane separation system **100** is configured so that the condensable component in a liquid state is present in at least part of a range of 20% or more and 100% or less of the first flow path **A**. In addition to the condensable component in a liquid state, the condensable component in a gaseous state may be present in the range of 20% or more and 100% or less of the first flow path **A**. Meanwhile, the condensable component in a gaseous state is present and the condensable component in a liquid state is not typically present, in the range of 0% or more and less than 20% of the first flow path **A**. With the configuration as described above, the separation membrane allows the permeate gas to efficiently permeate therethrough in the range of 0% or more and less than 20% of the first flow path, in which the partial pressure of the permeate gas in the mixed gas is relatively large, and the condensable component can be stably liquified in the range of 20% or more and 100% or less of the first flow path **A**, in which the partial pressure of the condensable component in the mixed gas is relatively large.

In one embodiment, the membrane separation system **100** further includes a recovery unit **7**. The recovery unit **7** can recover the condensable component in a liquid state. The recovery unit **7** may have any appropriate configuration. The recovery unit **7** can typically recover the condensable component in a liquid state that has been discharged from the downstream end portion of the first flow path **A**. The presence or absence of the condensable component in a liquid state in the downstream end portion of the first flow path **A** may be determined based on the presence or absence of any condensable component in a liquid state to be recovered by the recovery unit.

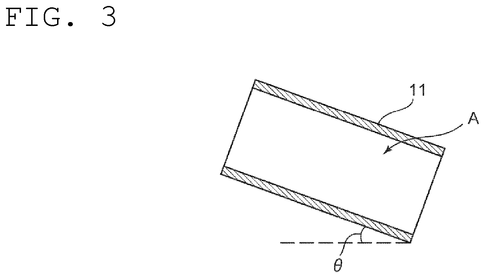

As illustrated in FIG. **3**, the first flow path **A** may be inclined downward in a vertical direction as extending toward a downstream side in the direction of passage of the mixed gas. In one embodiment, at least part of the separation membrane **11** is arranged such that the downstream end portion of the first flow path **A** is positioned lower than the upstream end portion in the vertical direction. In the illustrated example, the whole of the separation membrane **11** is arranged so as to be inclined with respect to a horizontal direction. When the first flow path is inclined as described above, the accumulation of the condensable component in a liquid state in the first flow path can be stably prevented. In particular, when the membrane separation system includes the recovery unit, the condensable component in a liquid state can be smoothly discharged toward the recovery unit.

An angle θ formed between the direction in which the first flow path extends and the horizontal direction can be suitably and appropriately adjusted based on the orientation of a gas flow, a surface tension, the diameter of the first flow path and the like. The angle θ formed between the direction in which the first flow path extends and the horizontal direction is, for example, more than 0° and 90° or less. When the angle θ formed between the direction in which the first flow path extends and the horizontal direction is steep, the discharge speed of the condensable component in a liquid state can be improved. Meanwhile, when the angle θ formed between the direction in which the first flow path extends and the horizontal direction is gentle, the condensable component in a liquid state can be accumulated in the lower part of the first flow path, and thus the condensable component in a liquid state in the upper part of the first flow path can be reduced. That is, when the angle θ formed between the direction in which the first flow path extends and the horizontal direction is gentle, a coverage of the first flow path can be reduced. Thus, it is preferred that improvement in the discharge speed of the condensable component in a liquid state and a low coverage of the first flow path be achieved in a well-balanced manner by appropriately adjusting the angle θ formed between the direction in which the first flow path extends and the horizontal direction.

The lower limit value of the angle θ described above is preferably a sliding angle for the resulting condensable component in a liquid state. The setting of the lower limit value as described above allows the condensable component in a liquid state to be efficiently discharged.

The sliding angle for the resulting condensable component in a liquid state can be obtained experimentally by, for example, the tilting method. When the sliding angle is obtained experimentally, a sample cut out from the separation membrane or, for example, a flat plate-shaped sample that has been prepared so as to be substantially the same as the actual separation membrane for the measurement of an inclination angle may be used for a solid. Further, a simulant liquid that has been prepared in accordance with the properties of the condensable component can be used for a liquid. Typically, 10 mg of the simulant liquid can be used. A device used for the calculation of the sliding angle for the condensable component in a liquid state by the tilting method is not limited to any particular device. For example, B100W manufactured by ASUMI GIKEN, Limited or an extension device based thereon can be used.

The sliding angle for the resulting condensable component in a liquid state can also be estimated with known adhesion energy.

The sliding angle may vary depending on the gas flow through the first flow path. Specifically, the condensable component in a liquid state is thrust by the gas flow. Thus, as the flow rate of the gas increases, the sliding angle may decrease. In this case, an actual sliding angle can be estimated by, for example, appropriately correcting the influence of the gas flow rate for the sliding angle that has been experimentally obtained by the tilting method.

The upper limit value of the angle θ is preferably 80°. The coverage of the first flow path can be estimated by the following formula.

$$\text{Coverage} = 1 - 0.5 \times \cos(\theta)$$

That is, when the angle θ is 0°, the condensable component in a liquid state can be accumulated in the lower part of the first flow path as described above, and thus the coverage is 0.5. Further, when the angle θ is 90°, an upper part and a lower part of the first flow path are not distinguishably defined, and thus the coverage is 1. In this case, it is generally known that the permeation performance of the separation membrane in a covered area is significantly reduced due to a reduction in effective membrane area or the like. The permeation performance of the separation membrane in the covered area may be reduced to, for example, about 10% of the permeation performance of the separation membrane in an uncovered area. As a result of calculating a relationship between the angle θ and the degree of reduction in permeation performance of the separation membrane based on the above-mentioned findings, it has been found that the permeation performance of the separation membrane is significantly reduced when the angle θ is set larger than 80°. Thus, the coverage of the first flow path is reduced by setting the angle θ to 80° or less, to thereby enable effective expression of the permeation performance of the separation membrane.

Further, when the membrane separation system includes the recovery unit, the flow rate of the mixed gas supplied to the first flow path **A** of the separation membrane system **100** may be temporarily increased. In this manner, the condensable component in a liquid state in the first flow path can be discharged from the membrane separation system. Temporarily increasing the flow rate is suitable when, in particular, the condensable component in a liquid state is accumulated or the condensable component in a liquid state has a high viscosity because the condensable component in a liquid state can be smoothy discharged toward the recovery unit.

As illustrated in FIG. **1,** in one embodiment, the membrane separator **1** further includes a separation membrane container **2** that houses the separation membrane **11.** In a space outside the separation membrane **11,** the inner surface of the separation membrane container **2** typically defines the second flow path **B.** The separation membrane container **2** has a gas inlet **21,** a first gas outlet **22,** and a second gas outlet **23.** The gas inlet **21** is in communication with the upstream end portion of the first flow path **A.** The mixed gas can pass through the gas inlet **21** during a steady operation described later. The first gas outlet **22** is in communication with the downstream end portion of the first flow path **A.** A treated gas in which the permeate gas and the condensable component have been reduced after passing through the first flow path **A** can pass through the first gas outlet **22** during the steady operation described later.

The second gas outlet **23** is in communication with the second flow path **B.** The second gas outlet **23** allows the permeate gas to be discharged from the second flow path **B** during the steady operation described later.

In one embodiment, the membrane separation system **100** further includes a supply unit **6.** The supply unit **6** can supply the mixed gas containing the permeate gas and the condensable component in a gaseous state to the first flow path **A** of the membrane separator **1.** In the illustrated example, the supply unit **6** includes a supply line **61.**

The supply line **61** is a pipe for supplying the mixed gas to the first flow path **A.** Although not shown, the upstream end portion of the supply line **61** in a direction of supply of the mixed gas is connected to, for example, a storage tank for storing the mixed gas. The downstream end portion of the supply line **61** in the direction of supply of the mixed gas is typically connected to the separation membrane container **2** so as to be in communication with the gas inlet **21.**

The membrane separation system **100** may further include any appropriate component as long as the effects of the present disclosure are not inhibited. The any appropriate component is, for example, a component capable of adjusting the temperature and/or the pressure of the mixed gas in the first flow path (for example, a cooling mechanism, a compression mechanism).

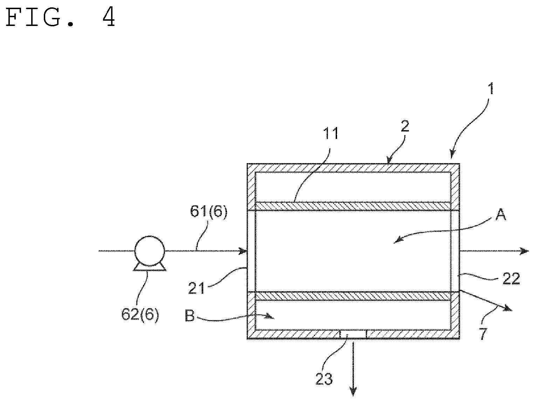

As illustrated in FIG. **4,** in one embodiment, the supply unit **6** further includes a pressure-increasing device **62.** The pressure-increasing device **62** is provided to the supply line **61,** and can adjust the pressure of the mixed gas passing through the supply line **61.** In this manner, the temperature and/or the pressure of the mixed gas in the first flow path can be smoothly adjusted.

Now, the details of the separation membrane are described.

B. Separation Membrane

The separation membrane **11** is formed so as to allow the permeate gas to relatively easily permeate therethrough and to allow the condensable component in a gaseous state to permeate therethrough less easily than the permeate gas. In other words, the permeation speed of the condensable component in a gaseous state through the separation membrane is sufficiently smaller than the permeation speed of the permeate gas. Thus, the partial pressure of the condensable component in the mixed gas passing through the first flow path increases as the mixed gas flows toward the downstream side in the direction of passage.

When the start point of the steady operation described later is defined as 0%, and the end point thereof is defined as 100%, the average value of a gas permeation amount at which a gas permeates through the separation membrane **11** during a period of from 90% to 100% of the steady operation (hereinafter referred to as "end-period average gas permeation amount") is, for example, 0.5 or more, preferably 0.7 or more, more preferably 0.9 or more with respect to the average value of a gas permeation amount at which a gas permeates through the separation membrane **11** during a period of from 45% to 55% of the steady operation (hereinafter referred to as "intermediate-period average gas permeation amount"). Meanwhile, the upper limit of the end-period average gas permeation amount with respect to the intermediate-period average gas permeation amount is typically 1.0. That is, the separation membrane is formed such that the end-period average gas permeation amount falls within such ranges. Thus, even when the condensable component in a liquid state is generated, the separation membrane can ensure a sufficient gas permeation amount.

Examples of the separation membrane **11** include organic membranes and inorganic membranes. Of those, an inorganic membrane is preferred. When the separation membrane is formed of an organic membrane, examples of the structure thereof include hollow fiber structures and spiral structures. Meanwhile, when the separation membrane is formed of an inorganic membrane, the first flow path can be designed with a larger diameter because the inorganic membrane has stiffness superior to that of an organic membrane. As a result, in comparison to a case in which the separation membrane is formed of an organic membrane, pressure loss in the first flow path can be markedly reduced even when a fluid flowing through the first flow path is in a gas-liquid mixed phase.

The thickness of the separation membrane **11** can be suitably and appropriately adjusted.

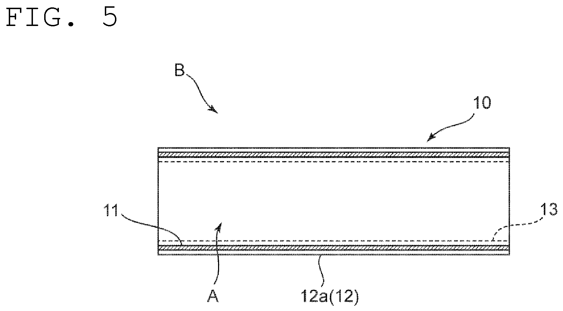

As illustrated in FIG. **5,** in one embodiment, the separation membrane **11** is supported by a substrate **12.** In other words, the membrane separator **1** further includes the substrate **12.** The separation membrane **11** and the substrate **12** form a separation membrane complex **10.**

The substrate **12** may have any appropriate shape. Examples of the shape of the substrate **12** include a cylindrical shape, a honeycomb shape, and a plate-like shape.

In one embodiment, the substrate **12** is a porous substrate. The porous substrate has, for example, a monolith-type structure including: a framework being continuous in a three-dimensional network pattern; and communication holes defined by the framework.

The porous substrate may be formed of any appropriate material. Typical examples of a material for the porous substrate include a ceramic sintered body. Examples of the ceramic sintered body include alumina, silica, mullite, zirconia, titania, yttria, silicon nitride, silicon carbide, and cordierite. The ceramic sintered bodies may be used alone or in combination. Of the ceramic sintered bodies, alumina is preferred.

The porous substrate may contain an inorganic binding material. Examples of the inorganic binding material include titania, mullite, easily sinterable alumina, silica, glass frit, clay mineral, and easily sinterable cordierite. The inorganic binding materials may be used alone or in combination.

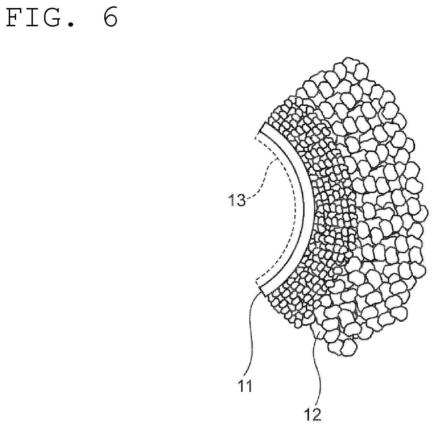

The porous substrate may be made up of a single layer or may have a multilayer structure in which multiple layers are stacked. In one embodiment, as illustrated in FIG. **6,** the porous substrate has a multilayer structure including a plurality of layers being different in pore diameter. In this case, it is preferred that the pore diameter of the layer closer to the separation membrane **11** be smaller.

The average pore diameter of the porous substrate is, for example, from 0.01 $\mu$m to 70 $\mu$m, preferably from 0.05 $\mu$m to 25 $\mu$m. The average pore diameter of the porous substrate on the separation membrane side is from 0.01 $\mu$m to 1 $\mu$m, preferably from 0.05 $\mu$m to 0.5 $\mu$m.

With regard to the distribution of the pore diameters in the whole including the surface and inside of the porous substrate, D5 is, for example, from 0.01 $\mu$m to 50 $\mu$m, D50 is, for example, from 0.05 $\mu$m to 70 um, and D95 is, for example, from 0.1 $\mu$m to 2,000 $\mu$m. The porosity of the porous substrate on the separation membrane side is, for example, from 25% to 50%. The average pore diameter of the porous substrate can be measured with, for example, a mercury porosimeter, a perm porometer, or a nano-perm porometer.

In one embodiment, the substrate **12** is a cylindrical substrate **12a.** Examples of the sectional shape of the cylindrical substrate **12a** in the direction orthogonal to the lengthwise direction of the cylindrical substrate **12a** include a triangle, a quadrangle, a pentagon, a hexagon, a higher polygon, a circle, and an ellipse. Of those, a circle is preferred. The outer diameter and the length of the cylindrical substrate may be appropriately set in accordance with its purpose.

In the illustrated example, the separation membrane **11** is formed on the inner surface of the cylindrical substrate **12a.** The separation membrane **11** may be formed entirely on the inner surface of the cylindrical substrate **12a** as in the illustrated example or may be formed partially on the inner surface of the cylindrical substrate **12a.** The internal space of the cylindrical substrate **12a** (space defined by the inner peripheral surface of the cylindrical substrate) includes the first flow path **A,** and the outer peripheral surface of the cylindrical substrate **12a** and the inner surface of the separation membrane container **2** (see FIG. **1)** define the second flow path **B.**

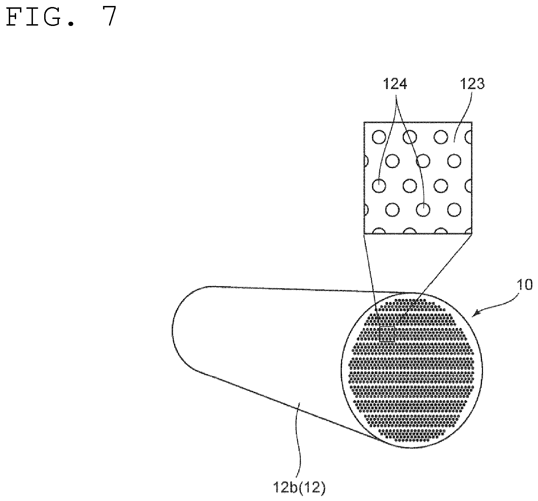

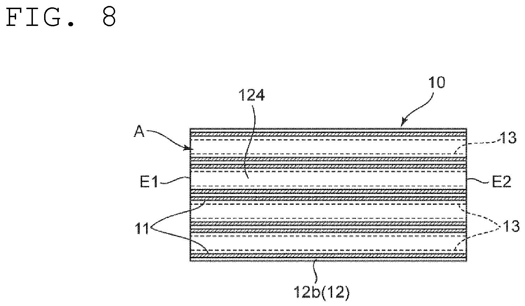

In another embodiment, as illustrated in FIG. **7** and FIG. **8,** the substrate **12** is a honeycomb-shaped substrate **12b.** The honeycomb-shaped substrate **12b** includes a partition wall **123** that defines a plurality of cells **124.** The cells **124** are each formed in a cylindrical shape so as to penetrate the honeycomb-shaped substrate **12b** in its lengthwise direction.

The cells **124** each extend from a first end surface **E1** (inflow end surface) of the honeycomb-shaped substrate **12b** to a second end surface **E2** (outflow end surface) thereof in the lengthwise direction (axial direction) of the honeycomb-shaped substrate **12b** (see FIG. **8**). The cells **124** each have any appropriate shape in a cross section in a direction perpendicular to the lengthwise direction of the honeycomb-shaped substrate **12b.** Examples of the sectional shape of the cells include a triangle, a quadrangle, a pentagon, a hexagon, a higher polygon, a circle, and an ellipse. The sectional shapes and sizes of the cells may be all the same, or may be at least partly different. Of such sectional shapes of the cells, for example, a circle is preferred.

The distance between the center axes of the plurality of cells **124** is, for example, from 0.3 mm to 20 mm. A cell density in a cross section in the direction perpendicular to the lengthwise direction of the honeycomb-shaped substrate (that is, the number of cells **124** per unit area) may be appropriately set in accordance with purposes. The cell density may be, for example, from 0.5 cells/cm$^2$ to 320 cells/cm$^2$. When the cell density falls within such range, the strength and effective geometric surface area (GSA) of the honeycomb-shaped substrate can be sufficiently ensured.

The honeycomb-shaped substrate **12b** has any appropriate shape (overall shape). The shape of the honeycomb-shaped substrate is, for example, a cylinder with a circle as its bottom, an elliptic cylinder with an ellipse as its bottom, a prismatic column with a polygon as its bottom, or a column with an indefinite shape as its bottom. The honeycomb-shaped substrate **12b** of the illustrated example has a cylindrical shape. The outer diameter and length of the honeycomb-shaped substrate may be appropriately set in accordance with purposes.

In the illustrated example, the separation membrane **11** is formed on the inner surface of each of the plurality of cells **124.** The separation membrane **11** may be formed entirely on the inner surface of the cell **124** or may be formed partially on the inner surface of the cell **124.** The internal space of each of the plurality of cells **124** (space defined by the inner peripheral surface of the cell) includes the first flow path **A,** and the outer peripheral surface of the honeycomb-shaped substrate **12b** and the inner surface of the separation membrane container **2** (see FIG. **1)** define the second flow path **B.**

In one embodiment, a protective layer **13** is formed on the surface of the separation membrane **11.** In the illustrated example, the protective layer **13** is positioned on the side opposite to the substrate **12** with respect to the separation membrane **11,** and faces the first flow path **A.** The configuration as described above can prevent the direct contact of the condensable component in a liquid state with the separation membrane. Thus, as compared with the case in which the separation membrane faces the first flow path, the performance of the separation membrane can be sufficiently ensured in the steady operation. As a result, in the steady operation, the average values of the gas permeation amounts described above (the end-period average gas permeation amount and the intermediate-period average gas permeation amount) can be stably achieved.

Examples of a material for the protective layer **13** include materials that are inhibited from being mixed with the condensable component in a liquid state. The material for the protective layer **13** can be typically selected based on a solubility parameter. The material for the protective layer **13** may be in a liquid state or a solid state at room temperature (23°C) and normal pressure (0.1 MPaA (absolute pressure)). In terms of the durability of the membrane separator, it is preferred that the material for the protective layer be solid. Meanwhile, when the material for the protective layer is liquid, the protective layer can be additionally formed on the separation membrane.

The protective layer **13** may be formed entirely on the surface of the separation membrane **11** or may be formed partially on the surface of the separation membrane **11**. For example, the protective layer **13** may be formed only on a portion in which the condensable component in a liquid state can be present. The thickness of the protective layer **13** can be suitably and appropriately adjusted.

C. Details of Operating Method for Membrane Separation System (Recovery Method for Condensable Component in Liquid State)

Next, an operating method for the membrane separation system is described.

In the operating method for the membrane separation system **100,** the mixed gas is supplied to the first flow path **A** to separate and recover the condensable component in a liquid state during the steady operation. More specifically, the steady operation of the membrane separation system **100** is performed while various conditions are suitably and appropriately adjusted so that the condensable component in a liquid state is present in the first flow path **A** as described above. The start point and the end point of the steady operation can be suitably and appropriately set. For example, the start point of supply of the mixed gas to the first flow path **A** may be set as the start point of the steady operation, and the end point of supply of the mixed gas to the first flow path **A** may be set as the end point of the steady operation.

Examples of the conditions that can be adjusted in the steady operation include the temperature and/or the pressure of the mixed gas supplied to the first flow path, a pressure in the second flow path, and the flow rate of the mixed gas.

With adjustment of the conditions described above, in the membrane separation system **100,** the permeate gas is typically separated in the gas permeation amounts described above from the mixed gas so that the condensable component in a liquid state is separated and recovered with less energy.

Industrial Applicability

The membrane separation system according to the embodiment of the present disclosure is used for the separation of a condensable component from a mixed gas, and in particular, can be suitably used for the separation of a refrigerant from a mixed gas.

Reference Signs List

    **1** membrane separator
    **11** separation membrane
    **12** substrate
    **13** protective layer
    **2** separation membrane container
    **21** gas inlet

    **22** first gas outlet
    **23** second gas outlet
    **A** first flow path
    **B** second flow path

**Claims**

1. A membrane separation system, comprising a membrane separator including a separation membrane,

   wherein the membrane separator has:

       a first flow path to which a mixed gas containing: a permeate gas that is allowed to permeate through the separation membrane; and a condensable component in a gaseous state is to be supplied; and
       a second flow path through which the permeate gas that has permeated through the separation membrane is allowed to flow, and

   wherein the membrane separation system is configured so that the condensable component in a liquid state is present in a downstream end portion of the first flow path in a direction of passage of the mixed gas.

2. The membrane separation system according to claim 1, wherein the first flow path is inclined downward in a vertical direction as extending toward a downstream side in the direction of passage of the mixed gas.

3. The membrane separation system according to claim 1, wherein, when an upstream end portion of the first flow path in the direction of passage is defined as 0%, and the downstream end portion of the first flow path is defined as 100%, the membrane separation system is configured so that the condensable component in a liquid state is present in at least part of a range of 20% or more and 100% or less of the first flow path.

4. The membrane separation system according to claim 3, wherein the membrane separation system is configured so that the condensable component in a liquid state is present on at least part of a surface defining the first flow path.

5. The membrane separation system according to any one of claims 1 to 4, wherein, when a start point of a steady operation for supplying the mixed gas to the first flow path to separate the condensable component in a liquid state is defined as 0%, and an end point of the steady operation is defined as 100%, an average value of a gas permeation amount at which a gas permeates through the separation membrane during a period of from 90% to 100% of the steady operation is 0.5 or more with respect to an average value of a gas permeation amount at which a gas permeates through the separation membrane during a period of from 45% to 55% of the steady operation.

6. The membrane separation system according to claim 5, wherein a protective layer is formed on a surface of the separation membrane, and faces the first flow path.

7. The membrane separation system according to claim 5, wherein the separation membrane is an inorganic membrane.

8. The membrane separation system according to any one of claims 1 to 4, further comprising a recovery unit configured to recover the condensable component in a liquid state.

9. The membrane separation system according to any one of claims 1 to 4,

    wherein the membrane separator further includes a separation membrane container that houses the separation membrane, and
    wherein the separation membrane container has:

        a gas inlet in communication with an upstream end portion of the first flow path in the direction of passage;
        a first gas outlet in communication with the downstream end portion of the first flow path in the direction of passage; and
        a second gas outlet in communication with the second flow path.

FIG. 1

100

FIG. 2

FIG. 3

FIG. 4

FIG. 5

FIG. 6

FIG. 7

FIG. 8

## INTERNATIONAL SEARCH REPORT

| International application No. |
|---|
| **PCT/JP2024/014561** |

| A. | CLASSIFICATION OF SUBJECT MATTER |
|---|---|

***B01D 53/22***(2006.01)i; ***B01D 69/12***(2006.01)i; ***B01D 71/02***(2006.01)i
FI:  B01D53/22; B01D69/12; B01D71/02 500

According to International Patent Classification (IPC) or to both national classification and IPC

| B. | FIELDS SEARCHED |
|---|---|

Minimum documentation searched (classification system followed by classification symbols)

B01D53/22; B01D53/26-53/28; B01D69/12; B01D71/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 62-278236 A (EBARA CORPORATION) 03 December 1987 (1987-12-03) page 4, upper right column, line 4 to lower right column, line 20, page 5, upper left column, line 17 to upper right column, line 17, page 5, lower left column, line 4 to page 6, upper right column, line 7, fig. 1-4 | 1-9 |
| Y | | 6 |
| X | JP 2006-305463 A (MITSUBISHI HEAVY INDUSTRIES, LTD.) 09 November 2006 (2006-11-09) paragraphs [0018]-[0027], [0038]-[0042], fig. 1-2, 5 | 1, 3-5, 7-9 |
| Y | | 6 |
| A | JP 4-290597 A (HITACHI, LTD.) 15 October 1992 (1992-10-15) | 1-9 |
| A | US 2019/0060835 A1 (AIR LIQUIDE ADVANCED TECHNOLOGIES U.S. LLC) 28 February 2019 (2019-02-28) | 1-9 |

☑ Further documents are listed in the continuation of Box C.  ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **07 June 2024** | **18 June 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**

International application No.

**PCT/JP2024/014561**

| C. | DOCUMENTS CONSIDERED TO BE RELEVANT | |
|---|---|---|
| Category* | Citation of document, with indication, where appropriate, of the relevant passages | Relevant to claim No. |
| A | JP 2009-61422 A (AIR LIQUIDE JAPAN LTD.) 26 March 2009 (2009-03-26) paragraph [0019] | 1-9 |

Form PCT/ISA/210 (second sheet) (July 2022)

**INTERNATIONAL SEARCH REPORT**
Information on patent family members

International application No.

**PCT/JP2024/014561**

| Patent document cited in search report | | | Publication date (day/month/year) | Patent family member(s) | | | Publication date (day/month/year) |
|---|---|---|---|---|---|---|---|
| JP | 62-278236 | A | 03 December 1987 | (Family: none) | | | |
| JP | 2006-305463 | A | 09 November 2006 | (Family: none) | | | |
| JP | 4-290597 | A | 15 October 1992 | (Family: none) | | | |
| US | 2019/0060835 | A1 | 28 February 2019 | WO | 2019/046291 | A1 | |
| JP | 2009-61422 | A | 26 March 2009 | WO page 11, lines 18-28 | 2009/030766 | A1 | |

Form PCT/ISA/210 (patent family annex) (July 2022)

REFERENCES CITED IN THE DESCRIPTION

**Patent documents cited in the description**

• JP 2019515230 A